# EUROPÄISCHE PATENTSCHRIFT

(11) **EP 3 889 402 B1**
(45) Veröffentlichungstag und Bekanntmachung des Hinweises auf die Patenterteilung: **25.10.2023**
(21) Anmeldenummer: 21159865.1
(22) Anmeldetag: 01.03.2021
(51) Int. Cl.: F01N 1/24, F01N 13/14, F01N 13/18

(54) **UMKLEIDUNGSANORDNUNG UND VERFAHREN ZUR HERSTELLUNG EINER UMKLEIDUNGSANORDNUNG FÜR EINE ABGASANLAGE EINER BRENNKRAFTMASCHINE**
COVER ASSEMBLY AND METHOD FOR MANUFACTURING A COVER ASSEMBLY FOR AN EXHAUST SYSTEM OF A COMBUSTION ENGINE
AGENCEMENT DE CARÉNAGE ET PROCÉDÉ DE FABRICATION D'UN AGENCEMENT DE CARÉNAGE POUR UNE INSTALLATION DE GAZ D'ÉCHAPPEMENT D'UN MOTEUR À COMBUSTION INTERNE

(30) Priorität: 02.04.2020 DE 102020109186
(43) Veröffentlichungstag der Anmeldung: 06.10.2021
(73) Patentinhaber: Purem GmbH, 66539 Neunkirchen (DE)
(72) Erfinder: Gorke, Peter, 70327 Stuttgart (DE); Hempel, Frank, 66450 Bexbach (DE)
(74) Vertreter: Ruttensperger Lachnit Trossin Gomoll

(56) Entgegenhaltungen:
- JP-A- H 094 449
- JP-A- 2015 175 327

## Beschreibung

Die vorliegende Erfindung betrifft eine Umkleidungsanordnung für eine Abgasanlage einer Brennkraftmaschine sowie ein Verfahren zum Herstellen einer Umkleidungsanordnung für eine Abgasanlage einer Brennkraftmaschine.

Aus der EP 3 591 182 A1 ist eine Umkleidungsanordnung für eine Abgasanlage einer Brennkraftmaschine bekannt. Diese bekannte Umkleidungsanordnung umfasst ein Umkleidungselement mit einer als Blechumformteil ausgebildeten Umkleidungselementschale mit einem an die Außenumfangskontur der zu umkleidenden Komponente, also beispielsweise eines zu umkleidenden Schalldämpfers, angepassten Bodenwand und einer die Bodenwand umgebenden Umfangswand. In dem von dieser schalenartigen Struktur der Umkleidungselementschale umgebenen Innenraum ist mattenartig ausgebildetes Isoliermaterial angeordnet. Im Zusammenbauzustand, also dann, wenn das Umkleidungselement die zu umkleidende Komponente umgibt, ist das Isoliermaterial zwischen der Umkleidungselementschale und der zu umkleidenden Komponente fest gehalten.

Um dafür zu sorgen, dass vor dem Umkleiden der Komponente der Abgasanlage ein Zusammenhalt zwischen der Umkleidungselementschale und dem Isoliermaterial vorhanden ist, ist es beispielsweise bekannt, das Isoliermaterial durch Verklebung an der Umkleidungselementschale festzulegen.

Aus der JP 2015 175327 A sind eine Umkleidungsanordnung gemäß dem Oberbegriff des Anspruchs 1 und ein Verfahren zur Herstellung einer Umkleidungsanordnung gemäß dem Oberbegriff des Anspruchs 8 bekannt. Bei der aus der JP 2015 175327 A bekannten Umkleidungsanordnung wird ein Isoliermaterial an einer Innenseite einer Umkleidungselementschale durch eine Mehrzahl von U-förmig ausgebildeten, klammerartigen Befestigungsorganen festgelegt. Die Befestigungsorgane werden mit ihren U-Schenkeln durch die Umkleidungselementschale und das Isoliermaterial hindurchgedrückt, so dass ein die beiden U-Schenkel verbindender Verbindungssteg an einer Außenseite der Umkleidungselementschale positioniert ist. Die an der Innenseite des Isoliermaterials über dieses hervorstehenden Abschnitte der U-Schenkel werden derart umgebogen, dass sie beispielsweise mit ihren Endbereichen von der Innenseite des Isoliermaterial in dieses Eindringen.

Es ist die Aufgabe der vorliegenden Erfindung, eine Umkleidungsanordnung für eine Abgasanlage einer Brennkraftmaschine sowie ein Verfahren zum Herstellen einer Umkleidungsanordnung für eine Abgasanlage einer Brennkraftmaschine vorzusehen, welche einen kostengünstigen, gleichwohl zuverlässig wirkenden Aufbau einer Umkleidungsanordnung gewährleisten.

Gemäß einem ersten Aspekt der vorliegenden Erfindung wird diese Aufgabe gelöst durch eine Umkleidungsanordnung für eine Abgasanlage einer Brennkraftmaschine gemäß Anspruch 1, umfassend wenigstens ein Umkleidungselement mit einer Umkleidungselementschale und an einer einer zu umkleidenden Komponente einer Abgasanlage zugewandt zu positionierenden Innenseite der Umkleidungselementschale die Innenseite wenigstens bereichsweise überdeckendem Isoliermaterial, wobei das Isoliermaterial vermittels wenigstens eines die Umkleidungselementschale und das Isoliermaterial durchdringenden Befestigungsorgans an der Umkleidungselementschale festgelegt ist.

Für eine zuverlässige Befestigungswirkung kann wenigstens ein, vorzugsweise jedes Befestigungsorgan U-förmig, also nach Art einer Befestigungsklammer ausgebildet sein, wobei die beiden U-Schenkel die Umkleidungselementschale und das Isoliermaterial durchsetzen und in ihren an einer einer zu umkleidenden Komponente zugewandten Innenseite des Isoliermaterials hervorstehenden Abschnitten, derart aufeinander zu umgebogen sind, dass wenigstens einer dieser Abschnitte an der Innenseite des Isoliermaterials anliegt, und wobei ein die beiden U-Schenkel verbindender Verbindungssteg an einer von der zu umkleidenden Komponente abgewandt zu positionierenden Außenseite der Umkleidungselementschale anliegt. Dabei ist die Anordnung der umgebogenen Abschnitte derart, dass der umgebogene Abschnitt von einem der U-Schenkel an der Innenseite des Isoliermaterials anliegt und der umgebogene Abschnitt des anderen U-Schenkels den umgebogenen Abschnitt des einen U-Schenkels an dessen von dem Isoliermaterial abgewandter Seite derart übergreift, dass im Wesentlichen nur der umgebogene Abschnitt des einen U-Schenkels das Isoliermaterial berührt.

Bei dem erfindungsgemäßen Aufbau wird das Isoliermaterial durch technisch einfach zu realisierende, insbesondere den Einsatz von Klebstoffen vermeidende Maßnahmen an der zugeordneten Umkleidungselementschale festgelegt. Somit ist gewährleistet, dass vor dem Anbringen einer derartigen Umkleidungsanordnung bzw. eines Umkleidungselements derselben an einer Abgasanlage einer Brennkraftmaschine die Umkleidungselementschale und das zugeordnete Isoliermaterial zuverlässig und in definierter Positionierung aneinander gehalten werden, so dass beim Umkleiden der zu umkleidenden Komponente einer Abgasanlage, also beispielsweise eines Schalldämpfers oder einer Abgasbehandlungskomponente, die Umkleidungselementschale und das zugeordnete Isoliermaterial die für den Einbauzustand vorgesehene Relativlage zueinander aufweisen. Nach dem Umkleiden der Komponente der Abgasanlage ist das Isoliermaterial zwischen dieser Komponente und der zugeordneten Umkleidungselementschale fest und zuverlässig gehalten, so dass zu einer Fehlpositionierung führende Verschiebungen des Isoliermaterials nicht auftreten können.

Um einerseits eine ausreichende Stabilität für die Umkleidungsanordnung bereitstellen zu können, andererseits zu gewährleisten, dass das wenigstens eine Befestigungsorgan durch die Umkleidungselementschale hindurchgedrückt werden kann, wird vorgeschlagen, dass in Zuordnung zu wenigstens einem, vorzugsweise jedem das Isoliermaterial an der Umkleidungselementschale festlegenden Befestigungsorgan die Umkleidungselementschale einen Befestigungsorgan-Aufnahmebereich mit bezüglich einer Grund-Wandstärke der Umkleidungselementschale in einem den Befestigungsorgan-Aufnahmebereich umgebenden Schalenbereich verringerter Wandstärke aufweist.

Hierzu kann beispielsweise vorgesehen sein, dass die Wandstärke der Umkleidungselementschale in wenigstens einem, vorzugsweise jedem Befestigungsorgan-Aufnahmebereich im Bereich von 0,2 mm bis 0,4 mm, vorzugsweise bei etwa 0,3 mm, liegt, und dass die Grund-Wandstärke im Bereich von 0,4 mm bis 0,6 mm, vorzugsweise bei etwa 0,5 mm, liegt.

Um einen übermäßigen Überstand des Befestigungsorgans an einer von der zu umkleidenden Komponente abgewandt zu positionierenden Außenseite des Umkleidungselements zu vermeiden, wird vorgeschlagen, dass wenigstens ein, vorzugsweise jeder Befestigungsorgan-Aufnahmebereich durch eine an einer von der zu umkleidenden Komponente abgewandt zu positionierenden Außenseite der Umkleidungselementschale vorgesehene Einsenkung bereitgestellt ist.

Das Isoliermaterial kann mattenartig, also beispielsweise als ein- oder mehrlagige Fasermatte oder geschäumtes Material, ausgebildet sein. Ferner kann für einen stabilen Zusammenhalt vorgesehen sein, dass das Isoliermaterial durch eine Mehrzahl von Befestigungsorganen an der Umkleidungselementschale festgelegt ist.

Um eine gegen Umwelteinflüsse und thermische Einflüsse stabile Ausgestaltung zu erlangen, kann die Umkleidungselementschale ein Blechumformteil sein.

Gemäß einem weiteren Aspekt wird die eingangs genannte Aufgabe gelöst durch ein Verfahren zur Herstellung einer Umkleidungsanordnung für eine Abgasanlage einer Brennkraftmaschine gemäß Anspruch 8, wobei die Umkleidungsanordnung wenigstens ein Umkleidungselement mit einer Umkleidungselementschale und an einer einer zu umkleidenden Komponente einer Abgasanlage zugewandt zu positionierenden Innenseite der Umkleidungselementschale die Innenseite wenigstens bereichsweise überdeckendem Isoliermaterial umfasst, wobei das Verfahren die Maßnahmen umfasst:
a) Bereitstellen einer Umkleidungselementschale für das wenigstens eine Umkleidungselement,
b) Bereitstellen von an der Innenseite der Umkleidungselementschale anzuordnendem Isoliermaterial,
c) Anordnen des Isoliermaterials an der Innenseite der Umkleidungselementschale,
d) Festlegen des Isoliermaterials an der Umkleidungselementschale durch wenigstens ein die Umkleidungselementschale und das Isoliermaterial durchdringendes Befestigungsorgan.

Für einen leicht herzustellenden, stabilen Zusammenhalt wird bei der Maßnahme d) wenigstens ein zwei U-Schenkel aufweisendes U-förmiges Befestigungsorgan mit seinen U-Schenkeln durch die Umkleidungselementschale und das Isoliermaterial hindurchgedrückt, so dass ein die beiden U-Schenkel verbindender Verbindungssteg an einer von der zu umkleidenden Komponente abgewandt zu positionierenden Außenseite der Umkleidungselementschale anliegt und dass die beiden U-Schenkel an einer der zu umkleidenden Komponente zugewandten Innenseite des Isoliermaterials hervorstehen und mit ihren an der Innenseite des Isoliermaterials hervorstehenden Abschnitten derart, vorzugsweise aufeinander zu, umgebogen werden, dass wenigstens einer dieser Abschnitte an der Innenseite des Isoliermaterials anliegt.

Bei der Maßnahme d) werden die U-Schenkel derart umgebogen, dass der umgebogene Abschnitt von einem der U-Schenkel an der Innenseite des Isoliermaterials anliegt und der umgebogene Abschnitt des anderen U-Schenkels den umgebogenen Abschnitt des einen U-Schenkels an dessen von dem Isoliermaterial abgewandter Seite derart übergreift, dass im Wesentlichen nur der umgebogene Abschnitt des einen U-Schenkels das Isoliermaterial berührt.

Bei diesem Verfahren kann zum leichten Ermöglichen des Hindurchdrückens des wenigstens einen Befestigungsorgans durch die Umkleidungselementschale bei gleichwohl stabilem Aufbau die Maßnahme a) das Bereitstellen der Umkleidungselementschale mit wenigstens einem Befestigungsorgan-Aufnahmebereich mit bezüglich einer Grund-Wandstärke der Umkleidungselementschale in einem den Befestigungsorgan-Aufnahmebereich umgebenden Schalenbereich verringerter Wandstärke umfassen.

Insbesondere kann hierfür vorgesehen sein, dass die Maßnahme a) das Bereitstellen der Umkleidungselementschale mit einer Grund-Wandstärke im Bereich von 0,4 mm bis 0,6 mm, vorzugsweise etwa 0,5 mm, und das Bereitstellen der Umkleidungselementschale mit einer Wandstärke im Bereich von 0,2 mm bis 0,4 mm, vorzugsweise etwa 0,3 mm, in wenigstens einem Befestigungsorgan-Aufnahmebereich umfasst, oder/und dass bei der Maßnahme a) eine Einsenkung zum Bereitstellen wenigstens eines Befestigungsorgan-Aufnahmebereichs an einer von der zu umkleidenden Komponente abgewandt zu positionierenden Außenseite der Umkleidungselementschale gebildet wird.

Für einen thermisch stabilen Aufbau wird vorgeschlagen, dass bei der Maßnahme a) die Umkleidungselementschale als Blechumformteil bereitgestellt wird.

Insbesondere dann, wenn die Umkleidungselementschale als Blechumformteil bereitgestellt wird, kann bei der Maßnahme a) der wenigstens eine Befestigungsorgan-Aufnahmebereich durch materialverdrängende Bearbeitung oder/und materialabhebende Bearbeitung eines zum Bereitstellen der Umkleidungselementschale verwendeten Blechrohlings bereitgestellt werden. Dieser Vorgang zum Erzeugen eines Befestigungsorgan-Aufnahmebereichs kann an dem Blechrohling vor dem Umformen desselben zum Erhalt der gewünschten Form der Umkleidungselementschale durchgeführt werden, oder kann durchgeführt werden, während der Blechrohling umgeformt wird oder nachdem der Blechrohling zum Erhalt dieser gewünschten Form bereits umgeformt worden ist.

Bei der Maßnahme b) kann das Isoliermaterial als mattenartiges Isoliermaterial bereitgestellt werden.

Zum Vermeiden unnötiger Produktionskosten wird auch unter Berücksichtigung des Umstandes, dass das Festlegen durch ein oder mehrere Befestigungsorgane für einen die erforderliche Positionierung des Isoliermaterials bezüglich der zugeordneten Umkleidungselementschale gewährleistenden Zusammenhalt ausreichend ist, erfindungsgemäß weiter vorgeschlagen, dass neben der Maßnahme d) zum Festlegen des Isoliermaterials an der Umkleidungselementschale durch wenigstens ein Befestigungsorgan keine weiteren Maßnahmen zum Festlegen des Isoliermaterials an der Umkleidungselementschale durchgeführt werden.

Die Erfindung betrifft ferner eine Abgasanlage mit wenigstens einer mit einer erfindungsgemäß aufgebauten, vorzugsweise mit einem erfindungsgemäßen Verfahren hergestellten, Umkleidungsanordnung umkleidete Komponente.

Die vorliegende Erfindung wird nachfolgend mit Bezug auf die beiliegenden Figuren detailliert beschrieben. Es zeigt:
- Fig. 1: einen Teilbereich einer Abgasanlage mit einer eine Komponente der Abgasanlage umkleidenden Umkleidungsanordnung;
- Fig. 2: in Seitenansicht ein Umkleidungsschalenelement der Umkleidungsanordnung der Fig. 1;
- Fig. 3: eine Detail-Schnittansicht eines gemäß der vorliegenden Erfindung mit Isoliermaterial verbundenen Umkleidungsschalenelements;
- Fig. 4: eine Detail-Schnittansicht eines in nicht erfindungsgemäßer Art und Weise mit Isoliermaterial verbundenen Umkleidungsschalenelements.

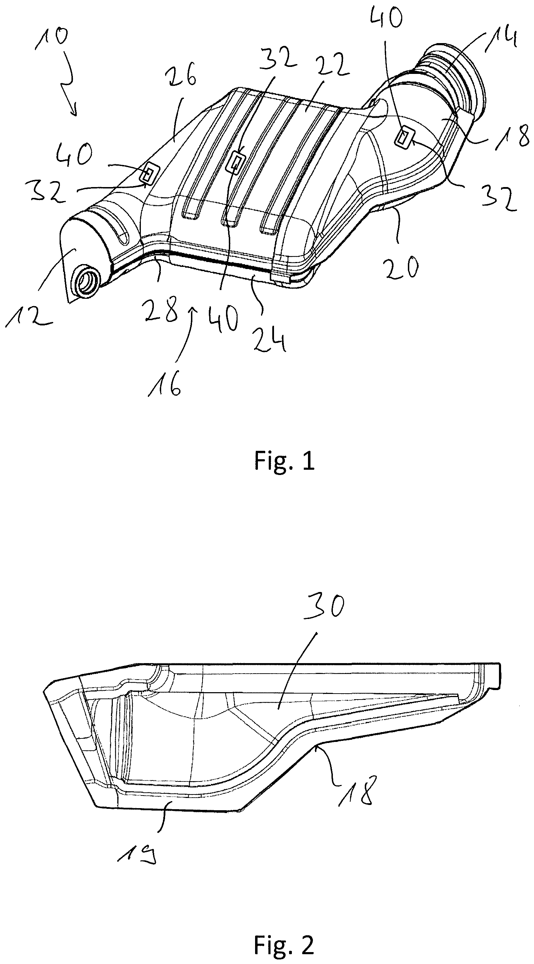

In Fig. 1 ist ein Teilbereich einer allgemein mit 10 bezeichneten Abgasanlage einer Brennkraftmaschine zu erkennen. Die Abgasanlage 10 umfasst zwischen rohrartigen Abgasführungselementen 12, 14 eine in Fig. 1 von einer Umkleidungsanordnung 16 umgebene und daher nicht erkennbare Komponente, wie z. B. einen Schalldämpfer.

Die in Fig. 1 dargestellte Umkleidungsanordnung 16 umfasst eine Mehrzahl von einander jeweils paarweise zugeordneten Umkleidungselementen 18, 20, 22, 24, 26, 28. Jedes der Umkleidungselemente 18, 20, 22, 24, 26, 28 bildet mit dem dazu jeweils komplementären Umkleidungselement einen die Abgasanlage 10 bzw. die zu umkleidende Komponente vollständig umgebenden Bereich der Umkleidungsanordnung 16, wobei die zueinander komplementären Umkleidungselemente 18, 20 bzw. 22, 24 bzw. 26, 28 in aneinander angrenzenden Randbereichen beispielsweise durch Umbördeln oder/und durch Materialschluss, wie z. B. Verschweißen, fest miteinander verbunden sein können.

Um eine verbesserte Abschirmung der zu umkleidenden Komponente der Abgasanlage 10 zu erreichen, ist vorzugsweise bei allen Umkleidungselementen 18, 20, 22, 24, 26, 28 an einer der zu umkleidenden Komponente zugeordneten Innenseite einer jeweiligen Umkleidungselementschale vorzugsweise mattenartiges Isoliermaterial vorgesehen. Dieses beispielsweise eine oder mehrere Lagen von Fasermaterial oder geschäumtem Material umfassende Isoliermaterial ist in dem in Fig. 1 dargestellten Zusammenbauzustands stabil zwischen der jeweiligen Umkleidungselementschale der Umkleidungselemente 18, 20, 22, 24, 26, 28 und der umkleideten Komponente gehalten.

Vor dem Zusammenbau der Abgasanlage 10 muss jedoch dafür gesorgt werden, dass eine Umkleidungselementschale eines jeweiligen Umkleidungselements 18, 20, 22, 24, 26, 28 und das daran vorgesehene Isoliermaterial 30 aneinander gehalten werden, um zu gewährleisten, dass beim Zusammenbau bzw. auch nach dem Zusammenbau das Isoliermaterial die dafür vorgesehene Positionierung einerseits bezüglich der zugeordneten Umkleidungselementschale, andererseits bezüglich der zu umkleidenden Komponente aufweist.

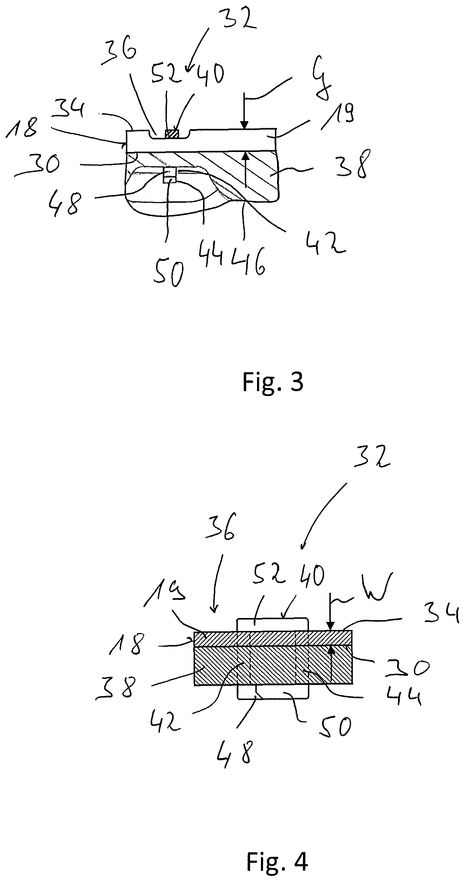

Um diese definierte Positionierung zu gewährleisten, wird bei zumindest einem, vorzugsweise jedem der Umkleidungselemente 18, 20, 22, 24, 26, 28 das Isoliermaterial durch zumindest ein Befestigungsorgan an der zugeordneten Umkleidungselementschale festgelegt. Dies ist in den Fig. 3 und 4 mit Bezug auf das in Fig. 2 dargestellte Umkleidungselement 18 bzw. dessen Umkleidungselementschale 19 veranschaulicht. Die nachfolgende Erläuterung gilt somit gleichermaßen auch für die Anbindung eines jeweiligen Isoliermaterials bei den anderen Umkleidungselementen 20, 22, 24, 26, 28.

An der Umkleidungselementschale 19 des Umkleidungselements 18 ist zumindest ein Befestigungsorgan-Aufnahmebereich 32 vorgesehen. Dieser Befestigungsorgan-Aufnahmebereich 32 ist dadurch bereitgestellt, dass an einer von der zu umkleidenden Komponente abgewandt zu positionierenden Außenseite 34 der Umkleidungselementschale 19 eine Einsenkung 36 vorgesehen wird. Diese Einsenkung 36 kann beim Herstellen der Umkleidungselementschale 19 beim Umformen eines Blechrohlings erzeugt werden, indem durch Einsatz eines entsprechenden Umformwerkzeugs dort, wo ein Befestigungsorgan-Aufnahmebereich 32 bzw. eine Einsenkung 36 gebildet werden soll, Material verdrängt wird. Dies kann im Zuge des Umformens des Blechrohlings zum Erhalt der in den Fig. 2 dargestellten Form der Umkleidungselementschale 19 erfolgen, so dass kein zusätzlicher Arbeitsgang erforderlich ist. Alternativ kann die Einsenkung 36 vor oder nach dem Umformen des Blechrohlings zum Erhalt der gewünschten Form der Umkleidungselementschale 19 durch ein entsprechendes Verformungswerkzeug bereitgestellt werden. Alternativ oder zusätzlich ist es möglich, eine derartige Einsenkung 36 durch einen materialabhebenden Vorgang zu erzeugen.

Zur Herstellung der Umkleidungsmaterialschale 19 kann beispielsweise Blechmaterial mit einer Grund-Wandstärke G im Bereich von etwa 0,5 mm eingesetzt werden. In dem in Fig. 4 vergrößert dargestellten Bereich einer Einsenkung 36 bzw. dem die Einsenkung 36 aufweisenden Befestigungsorgan-Aufnahmebereich 32 kann nach Erzeugung der Einsenkung 36 die Wandstärke W bei etwa 0,3 mm liegen.

Nachdem in der Umkleidungselementschale 19 ein oder mehrere derartige Befestigungsorgan-Aufnahmebereiche 32 bereitgestellt worden sind und das in mattenartiger Konfiguration bereitgestellte Isoliermaterial 38 an der Innenseite 30 der Umkleidungselementschale 19 positioniert wurde, wird in dem bzw. jedem Befestigungsorgan-Aufnahmebereich 32 das Isoliermaterial 38 durch ein im dargestellten Beispiel klammerartig ausgebildetes Befestigungsorgan 40 an der Umkleidungselementschale 18 festgelegt. Das klammerartig, also mit im Wesentlichen U-förmiger Struktur bereitgestellte Befestigungsorgan 40 wird mit seinen beiden U-Schenkeln 42, 44 von der Außenseite 34 her im Bereich einer Einsenkung 36 durch die Umkleidungselementschale 19 und das an der Innenseite 30 der Umkleidungselementschale 19 positionierte Isoliermaterial 18 hindurchgedrückt. Da in dem bzw. jedem Befestigungsorgan-Aufnahmebereich 32 die Umkleidungselementschale 19 mit vergleichsweise geringer Wandstärke W bereitgestellt ist, ist es nicht erforderlich, übermäßig stark dimensionierte Befestigungsorgane 40 einzusetzen, um zu gewährleisten, dass bei dem Vorgang des Hindurchdrückens durch die Umkleidungselementschale 19 die U-Schenkel 42, 44 des klammerartigen Befestigungsorgans 40 sich nicht verformen.

Nach dem Hindurchdrücken des Befestigungsorgans 40 durch die Umkleidungselementschale 19 und das Isoliermaterial 38 werden die U-Schenkel 42, 44 vorzugsweise aufeinander zu umgebogen, wobei, wie in Fig. 3 erkennbar, das grundsätzlich sehr flexible Isoliermaterial 38 gegen die Innenseite 30 der Umkleidungselementschale 19 gepresst wird und dabei komprimiert wird. Die aufeinander zu gebogenen Abschnitte 48, 50 der U-Schenkel 42, 44 können in diesem Zustand verschiedene Lagen zueinander einnehmen. In Fig. 3 ist ein Zustand dargestellt, in welchem der umgebogene Abschnitt 50 des U-Schenkels 44 den umgebogenen Abschnitt 48 des U-Schenkels 42 an dessen von dem Isoliermaterial 38 abgewandter Seite übergreift, so dass im Wesentlichen nur der umgebogene Abschnitt 48 des U-Schenkels 42 das Isoliermaterial 38 berührt. Die Fig. 4 veranschaulicht einen Zustand, in welchem die beiden umgebogenen Abschnitte 48, 50 der U-Schenkel 42, 44 nebeneinander und einander überlappend liegen.

Das Vorsehen der Einsenkung 36 eines jeweiligen Befestigungsorgan-Aufnahmebereichs 32 an der Außenseite 24 der Umkleidungselementschale 19 hat den Vorteil, dass nach dem Einbringen eines Befestigungsorgans 40 ein die beiden U-Schenkel 42, 44 verbindender Verbindungssteg 52 an der Außenseite 34 der Umkleidungselementschale 19 in der Einsenkung 36 beispielsweise im Wesentlichen vollständig aufgenommen ist und somit nicht nach außen hervorsteht.

Durch das Verwenden derartiger verformbarer, beispielsweise aus Metallmaterial aufgebauter Befestigungsorgane wird es möglich, das Isoliermaterial in einfacher und zuverlässig wirkender Art und Weise an der jeweils zugeordneten Umkleidungselementschale festzulegen, so dass für einen nachfolgend durchzuführenden Montagevorgang zum Umkleiden einer Komponente einer Abgasanlage gewährleistet ist, dass das Isoliermaterial seine dafür vorgesehene Lage beibehält. Weitere Maßnahmen, wie z. B. das Verkleben des Isoliermaterials mit der jeweils zugeordneten Umkleidungselementschale, sind nicht erforderlich.

## Patentansprüche

1. Umkleidungsanordnung für eine Abgasanlage einer Brennkraftmaschine, umfassend wenigstens ein Umkleidungselement (18) mit einer Umkleidungselementschale (19) und an einer einer zu umkleidenden Komponente einer Abgasanlage (10) zugewandt zu positionierenden Innenseite (30) der Umkleidungselementschale (19) die Innenseite (30) wenigstens bereichsweise überdeckendem Isoliermaterial (38), wobei das Isoliermaterial (38) vermittels wenigstens eines die Umkleidungselementschale (19) und das Isoliermaterial (38) durchdringenden Befestigungsorgans (40) an der Umkleidungselementschale (19) festgelegt ist, wobei wenigstens ein Befestigungsorgan (40) U-förmig ausgebildet ist, wobei die beiden U-Schenkel (42, 44) die Umkleidungselementschale (19) und das Isoliermaterial (38) durchsetzen und in ihren an einer einer zu umkleidenden Komponente zugewandt zu positionierenden Innenseite (46) des Isoliermaterials (38) hervorstehenden Abschnitten (48, 50) derart aufeinander zu umgebogen sind, dass wenigstens einer der umgebogenen Abschnitte (48, 50) an der Innenseite (46) des Isoliermaterials (38) anliegt, und wobei ein die beiden U-Schenkel (42, 44) verbindender Verbindungssteg (52) an einer von der zu umkleidenden Komponente abgewandt zu positionierenden Außenseite (34) der Umkleidungselementschale (19) anliegt,
**dadurch gekennzeichnet, dass** der umgebogene Abschnitt (48) von einem der U-Schenkel (42) an der Innenseite (46) des Isoliermaterials (38) anliegt und der umgebogene Abschnitt (50) des anderen U-Schenkels (44) den umgebogenen Abschnitt (48) des einen U-Schenkels (42) an dessen von dem Isoliermaterial (38) abgewandter Seite derart übergreift, dass im Wesentlichen nur der umgebogene Abschnitt (48) des einen U-Schenkels (42) das Isoliermaterial (38) berührt.

2. Umkleidungsanordnung nach Anspruch 1, **dadurch gekennzeichnet, dass** in Zuordnung zu wenigstens einem, vorzugweise jedem das Isoliermaterial (38) an der Umkleidungselementschale (19) festlegenden Befestigungsorgan (40) die Umkleidungselementschale (19) einen Befestigungsorgan-Aufnahmebereich (32) mit bezüglich einer Grund-Wandstärke (G) der Umkleidungselementschale (19) in einem den Befestigungsorgan-Aufnahmebereich umgebenden Schalenbereich verringerter Wandstärke (W) aufweist.

3. Umkleidungsanordnung nach Anspruch 2, **dadurch gekennzeichnet, dass** die Wandstärke (W) der Umkleidungselementschale (19) in wenigstens einem, vorzugsweise jedem Befestigungsorgan-Aufnahmebereich (38) im Bereich von 0,2 mm bis 0,4 mm, vorzugsweise bei etwa 0,3 mm, liegt, und dass die Grund-Wandstärke (G) im Bereich von 0,4 mm bis 0,6 mm, vorzugsweise bei etwa 0,5 mm, liegt.

4. Umkleidungsanordnung nach Anspruch 2 oder 3, **dadurch gekennzeichnet, dass** wenigstens ein, vorzugsweise jeder Befestigungsorgan-Aufnahmebereich (32) durch eine an einer von der zu umkleidenden Komponente abgewandt zu positionierenden Außenseite (34) der Umkleidungselementschale (19) vorgesehene Einsenkung (36) bereitgestellt ist.

5. Umkleidungsanordnung nach einem der vorangehenden Ansprüche, **dadurch gekennzeichnet, dass** jedes Befestigungsorgan (40) U-förmig ausgebildet ist.

6. Umkleidungsanordnung nach einem der vorangehenden Ansprüche, **dadurch gekennzeichnet, dass** das Isoliermaterial (38) mattenartig ausgebildet ist, oder/und dass das Isoliermaterial (38) durch eine Mehrzahl von Befestigungsorganen (40) an der Umkleidungselementschale (19) festgelegt ist.

7. Umkleidungsanordnung einem der vorangehenden Ansprüche, **dadurch gekennzeichnet, dass** die Umkleidungselementschale (19) ein Blechumformteil ist.

8. Verfahren zur Herstellung einer Umkleidungsanordnung (16) für eine Abgasanlage (10) einer Brennkraftmaschine, wobei die Umkleidungsanordnung (16) wenigstens ein Umkleidungselement (18) mit einer Umkleidungselementschale (19) und an einer einer zu umkleidenden Komponente einer Abgasanlage (10) zugewandt zu positionierenden Innenseite (30) der Umkleidungselementschale (19) die Innenseite (30) wenigstens bereichsweise überdeckendem Isoliermaterial (38) umfasst, wobei das Verfahren die Maßnahmen umfasst:
a) Bereitstellen einer Umkleidungselementschale (19) für das wenigstens eine Umkleidungselement (18),
b) Bereitstellen von an der Innenseite (30) der Umkleidungselementschale (19) anzuordnendem Isoliermaterial (38),
c) Anordnen des Isoliermaterials (38) an der Innenseite (30) der Umkleidungselementschale (19),
d) Festlegen des Isoliermaterials (38) an der Umkleidungselementschale (19) durch wenigstens ein die Umkleidungselementschale (19) und das Isoliermaterial (38) durchdringendes Befestigungsorgan (40),
wobei bei der Maßnahme d) wenigstens ein zwei U-Schenkel (42, 44) aufweisendes U-förmiges Befestigungsorgan (40) mit seinen U-Schenkeln (42, 44) durch die Umkleidungselementschale (19) und das Isoliermaterial (38) hindurchgedrückt wird, so dass ein die beiden U-Schenkel (42, 44) verbindender Verbindungssteg (52) an einer von der zu umkleidenden Komponente abgewandt zu positionierenden Außenseite (34) der Umkleidungselementschale (19) anliegt und dass die beiden U-Schenkel (42, 44) an einer der zu umkleidenden Komponente zugewandten Innenseite (46) des Isoliermaterials (38) hervorstehen und mit ihren an der Innenseite (46) des Isoliermaterials (38) hervorstehenden Abschnitten (48, 50) derart aufeinander zu umgebogen werden, dass wenigstens einer dieser Abschnitte (48, 50) an der Innenseite (46) des Isoliermaterials (38) anliegt,
**dadurch gekennzeichnet, dass** bei der Maßnahme d) die U-Schenkel (42, 44) derart umgebogen werden, dass der umgebogene Abschnitt (48) von einem der U-Schenkel (42) an der Innenseite (46) des Isoliermaterials (38) anliegt und der umgebogene Abschnitt (50) des anderen U-Schenkels (44) den umgebogenen Abschnitt (48) des einen U-Schenkels (42) an dessen von dem Isoliermaterial (38) abgewandter Seite derart übergreift, dass im Wesentlichen nur der umgebogene Abschnitt (48) des einen U-Schenkels (42) das Isoliermaterial (38) berührt.

9. Verfahren nach Anspruch 8, **dadurch gekennzeichnet, dass** die Maßnahme a) das Bereitstellen der Umkleidungselementschale (19) mit wenigstens einem Befestigungsorgan-Aufnahmebereich (32) mit bezüglich einer Grund-Wandstärke (G) der Umkleidungselementschale (19) in einem den Befestigungsorgan-Aufnahmebereich (32) umgebenden Schalenbereich verringerter Wandstärke (W) umfasst.

10. Verfahren nach Anspruch 9, **dadurch gekennzeichnet, dass** die Maßnahme a) das Bereitstellen der Umkleidungselementschale (19) mit einer Grund-Wandstärke (G) im Bereich von 0,4 mm bis 0,6 mm, vorzugsweise etwa 0,5 mm, und das Bereitstellen der Umkleidungselementschale (19) mit einer Wandstärke im Bereich von 0,2 mm bis 0,4 mm, vorzugsweise etwa 0,3 mm, in wenigstens einem Befestigungsorgan-Aufnahmebereich (32) umfasst, oder/und dass bei der Maßnahme a) eine Einsenkung (36) zum Bereitstellen wenigstens eines Befestigungsorgan-Aufnahmebereichs (32) an einer von der zu umkleidenden Komponente abgewandt zu positionierenden Außenseite (34) der Umkleidungselementschale (19) gebildet wird.

11. Verfahren einem der Ansprüche 8-10, **dadurch gekennzeichnet, dass** bei der Maßnahme a) die Umkleidungselementschale (19) als Blechumformteil bereitgestellt wird.

12. Verfahren nach Anspruch 9 und Anspruch 11, **dadurch gekennzeichnet, dass** bei der Maßnahme a) der wenigstens eine Befestigungsorgan-Aufnahmebereich (32) durch materialverdrängende Bearbeitung oder/und materialabhebende Bearbeitung eines zum Bereitstellen der Umkleidungselementschale (19) verwendeten Blechrohlings bereitgestellt wird.

13. Verfahren nach einem der Ansprüche 8-12, **dadurch gekennzeichnet, dass** bei der Maßnahme b) das Isoliermaterial (38) als mattenartiges Isoliermaterial bereitgestellt wird.

14. Verfahren nach einem der Ansprüche 8-13, **dadurch gekennzeichnet, dass** neben der Maßnahme d) zum Festlegen des Isoliermaterials (38) an der Umkleidungselementschale (19) durch wenigstens ein Befestigungsorgan (40) keine weiteren Maßnahmen zum Festlegen des Isoliermaterials (38) an der Umkleidungselementschale (19) durchgeführt werden.

15. Abgasanlage, umfassend wenigstens eine mit einer Umkleidungsanordnung (16) nach einem der Ansprüche 1-7, vorzugsweise hergestellt mit einem Verfahren nach einem der Ansprüche 8-14, umkleidete Komponente.

## Claims

1. Sheathing arrangement for an exhaust system of an internal combustion engine, comprising at least one sheathing element (18) with a sheathing element shell (19) and on an inner side (30) of the sheathing element shell (19), insulation material (38) overlapping the inner side (30) in at least some areas, which inner side is to be positioned facing toward a component to be sheathed of an exhaust system (10), wherein the insulation material (38) is fixed to the sheathing element shell (19) by means of at least one fastening element (40) passing through the sheathing element shell (19) and the insulation material (38), wherein at least one fastening element (40) has a U-shaped configuration, wherein the two U-legs (42, 44) traverse the sheathing element shell (19) and the insulation material (38) and are bent, toward one another, in their sections (48, 50) protruding on an inner side (46) of the insulation material (38), which inner side is to be positioned facing toward a component to be sheathed, such that at least one of the sections (48, 50) abuts the inner side (46) of the insulation material (38), and wherein a connection web (52) connecting the two U-legs (42, 44) abuts an outer side (34) of the sheathing element shell (19), which outer side is to be positioned facing away from the component to be sheathed,
**characterised in that** the bent-over portion (48) of one of the U-legs (42) abuts the inner side (46) of the insulation material (38) and the bent-over portion (50) of the other U-leg (44) engages over the bent-over portion (48) of the one U-leg (42) on its side facing away from the insulation material (38) in such a way that essentially only the bent-over portion (48) of the one U-leg (42) touches the insulation material (38).

2. Sheathing arrangement in accordance with claim 1, **characterized in that** in association with at least one, and preferably with each fastening element (40) fixing the insulation material (38) to the sheathing element shell (19), the sheathing element shell (19) has a fastening element receiving area (32) with a wall thickness (W) that is reduced in a shell area enclosing the fastening element receiving area in relation to a base wall thickness (G) of the sheathing element shell (19).

3. Sheathing arrangement in accordance with claim 2, **characterized in that** the wall thickness (W) of the sheathing element shell (19) is in the range of 0.2 mm to 0.4 mm, preferably about 0.3 mm in at least one, and preferably in each fastening element receiving area (38), and that the base wall thickness (G) is in the range of 0.4 mm to 0.6 mm, preferably about 0.5 mm.

4. Sheathing arrangement in accordance with claim 2 or 3, **characterized in that** at least one, and preferably each fastening element receiving area (32) is formed by a recess (36) provided on an outer side (34) of the sheathing element shell (19), which outer side is to be positioned facing away from the component to be sheathed.

5. Sheathing arrangement in accordance with one of the above claims, **characterized in that** each fastening member (40) is U-shaped.

6. Sheathing arrangement in accordance with one of the above claims, **characterized in that** the insulation material (38) has a mat-like configuration, or/and that the insulation material (38) is fixed to the sheathing element shell (19) by means of a plurality of fastening elements (40).

7. Sheathing arrangement in accordance with one of the above claims, **characterized in that** the sheathing element shell (19) is a shaped sheet metal part.

8. Process for manufacturing a sheathing arrangement (16) for an exhaust system (10) of an internal combustion engine, wherein the sheathing arrangement (16) comprises at least one sheathing element (18) with a sheathing element shell (19) and on an inner side (30) of a sheathing element shell (19) insulation material overlapping the inner side (30) in at least some areas, which inner side is to be positioned facing toward a component to be sheathed of an exhaust system (10), wherein the process comprises the steps:
a) Providing a sheathing element shell (19) for the at least one sheathing element (18),
b) Providing insulation material (38) to be arranged on the inner side (30) of the sheathing element shell (19),
c) Arranging the insulation material (38) on the inner side (30) of the sheathing element shell (19), and
d) Fixing the insulation material (38) to the sheathing element shell (19) by at least one fastening element (40) passing through the sheathing element shell (19) and the insulation material (38),
wherein in step d) at least one U-shaped fastening element (40) having two U-legs (42, 44) is pushed with its U-legs (42, 44) through the sheathing element shell (19) and the insulation material (38), so that a connection web (52) connecting the two U-legs (42, 44) abuts an outer side (34) of the sheathing element shell (19), which outer side is to be positioned facing away from the component to be sheathed, and that the two U-legs (42, 44) protrude on an inner side (46) of the insulation material (38), which inner side faces toward the component to be sheathed, and are bent, preferably toward one another, with their sections (48, 50) protruding on the inner side (46) of the insulation material (38), such that at least one of these sections (48, 50) abuts the inner side (46) of the insulation material (38),
**characterized in that** in measure d) the U-legs (42, 44) are bent over in such a way that the bent-over portion (48) of one of the U-legs (42) abuts the inner side (46) of the insulating material (38) and the bent-over portion (50) of the other U-leg (44) engages over the bent-over portion (48) of the one U-leg (42) on its side facing away from the insulation material (38) in such a way, that essentially only the bent-over section (48) of the one U-leg (42) touches the insulation material (38).

9. Process in accordance with claim 8, **characterized in that** step a) comprises providing the sheathing element shell (19) with at least one fastening element receiving area (32) with a wall thickness (W) that is reduced in a shell area enclosing the fastening element receiving area (32) in relation to a base wall thickness (G) of the sheathing element shell (19).

10. Process in accordance with claim 9, **characterized in that** step a) comprises providing the sheathing element shell (19) with a base wall thickness (G) in the range of 0.4 mm to 0.6 mm, preferably about 0.5 mm, and providing the sheathing element shell (19) with a wall thickness in the range of 0.2 mm to 0.4 mm, preferably about 0.3 mm, in at least one fastening element receiving area (32), or/and that a recess (36) is formed in step a) for the formation of at least one fastening element receiving area (32) on an outer side (34) of the sheathing element shell (19), which outer side is to be positioned facing away from the component to be sheathed.

11. Process in accordance with one of the claims 8-10, **characterized in that** in step a) the sheathing element shell (19) is formed as a shaped sheet metal part.

12. Process in accordance with claim 9 and claim 11, **characterized in that** in step a) the at least one fastening element receiving area (32) is formed by material-displacing machining or/and material-removing machining of a sheet metal blank used for the formation of the sheathing element shell (19).

13. Process in accordance with one of the claims 8-12, **characterized in that** in step b) the insulation material (38) is provided as a mat-like insulation material.

14. Process in accordance with one of the claims 8-13, **characterized in that** no other steps for fixing the insulation material (38) to the sheathing element shell (19) are carried out aside from step d) for fixing the insulation material (38) to the sheathing element shell (19) by at least one fastening element (40).

15. Exhaust system, comprising at least one component sheathed with a sheathing arrangement (16) in accordance with one of the claims 1-7, which is preferably manufactured by a process in accordance with one of the claims 8-14.

## Revendications

1. Dispositif de gainage pour un système d'échappement d'un moteur à combustion interne, comprenant au moins un élément de gainage (18) avec une enveloppe d'élément de gainage (19) et sur un côté intérieur (30) de l'enveloppe d'élément de gainage (19) qui est à positionner à l'opposé d'un composant d'un système d'échappement (10), un matériau isolant (38) recouvrant le côté intérieur (30) dans au moins certaines zones, dans lequel le matériau isolant (38) est fixé à l'enveloppe de l'élément de gainage (19) au moyen d'au moins un élément de fixation (40) traversant l'enveloppe de l'élément de gainage (19) et le matériau isolant (38), dans lequel au moins un élément de fixation (40) a une configuration en forme de U, dans lequel les deux branches en U (42, 44) traversent l'enveloppe de l'élément de gainage (19) et le matériau isolant (38) et sont pliées, de préférence l'une vers l'autre, dans leurs sections (48, 50) faisant saillie sur un côté intérieur (46) du matériau isolant (38), à positionner à l'opposé d'un composant à gainer, de telle sorte qu'au moins l'une des sections (48, 50) pliées repose contre le côté intérieur (46) du matériau isolant (38), et dans lequel une entretoise de connexion (52) reliant les deux branches en U (42, 44) repose contre un côté extérieure (34) de l'enveloppe de l'élément de gainage (19) à positionner à l'opposé du composant à gainer,
**caractérisé en ce que** la partie repliée (48) de l'une des branches en U (42) repose contre le côté intérieur (46) du matériau isolant (38) et que la partie repliée (50) de l'autre branche en U (44) s'engage sur la partie repliée (48) de la branche en U (42) sur son côté opposé au matériau isolant (38) de telle sorte que pratiquement seule la partie repliée (48) de la branche en U (42) entre en contact avec le matériau isolant (38).

2. Dispositif de gainage selon la revendication 1, **caractérisé en ce qu'**en association avec au moins un, et de préférence avec chaque élément de fixation (40) fixant le matériau isolant (38) à l'enveloppe de l'élément de gainage (19), l'enveloppe de l'élément de gainage (19) présente une zone de réception de l'élément de fixation (32) avec une épaisseur de paroi (W) qui est réduite dans une zone d'enveloppe entourant la zone de réception de l'élément de fixation par rapport à une épaisseur de paroi de base (G) de l'enveloppe de l'élément de gainage (19).

3. Dispositif de gainage selon la revendication 2, **caractérisé en ce que** l'épaisseur de paroi (W) de l'enveloppe de l'élément de gainage (19) est comprise entre 0,2 mm et 0,4 mm, de préférence est d'environ 0,3 mm dans au moins une, et de préférence dans chaque zone de réception de l'élément de fixation (38) et **en ce que** l'épaisseur de paroi de base (G) est comprise entre 0,4 mm et 0,6 mm, et est de préférence d'environ 0,5 mm.

4. Dispositif de gainage selon la revendication 2 ou 3, **caractérisé en ce qu'**au moins une, et de préférence chaque zone de réception d'élément de fixation (32) est formée par un renfoncement (36) prévu sur un côté extérieur (34) de l'enveloppe de l'élément de gainage (19) a positionner à l'opposé du composant à gainer.

5. Dispositif de gainage selon l'une des revendications précédentes, **caractérisé en ce que** chaque élément de fixation (40) est en forme de U.

6. Dispositif de gainage selon l'une des revendications précédentes, **caractérisé en ce que** le matériau isolant (38) a une configuration en forme de tapis, ou/et **en ce que** le matériau isolant (38) est fixé à l'enveloppe de l'élément de gainage (19) au moyen d'une pluralité d'éléments de fixation (40).

7. Dispositif de gainage selon l'une des revendications précédentes, **caractérisé en ce que** l'enveloppe de l'élément de gainage (19) est une pièce de tôle façonnée.

8. Procédé de fabrication d'un dispositif de gainage (16) pour un système d'échappement (10) d'un moteur à combustion interne, dans lequel le dispositif de gainage (16) comprend au moins un élément de gainage (18) avec une enveloppe d'élément de gainage (19) et sur un côté intérieur (30) d'une enveloppe d'élément de gainage (19) un matériau isolant recouvrant le côté intérieur (30) dans au moins certaines zones, lequel est à positionner à l'opposé d'un composant d'un système d'échappement (10), qui doit être gainé, dans lequel le procédé comprend les étapes suivantes :
a) Fournir une enveloppe d'élément de gaine (19) pour ledit au moins un élément de gaine (18),
b) Fournir un matériau isolant (38) à disposer sur le côté intérieur (30) de l'enveloppe de l'élément de gainage (19),
c) Arranger le matériau isolant (38) sur le côté intérieur (30) de l'enveloppe d'élément de gaine (19), et
d) Fixer le matériau isolant (38) à l'enveloppe d'élément de gaine (19) par au moins un élément de fixation (40) traversant l'enveloppe d'élément de gaine (19) et le matériau isolant (38),
dans lequel, à l'étape d), au moins un élément de fixation en forme de U (40) ayant deux branches en U (42, 44) est poussé avec ses branches en U (42, 44) à travers l'enveloppe d'élément de gaine (19) et le matériau isolant (38), de sorte qu'une entretoise de connexion (52) reliant les deux branches en U (42, 44) repose contre un côté extérieur (34) de l'enveloppe d'élément de gaine (19), à positionner à l'opposé du composant à gainer, et que les deux branches en U (42, 44) font saillie sur un côté intérieur (46) du matériau isolant (38), orienté vers le composant à gainer, et sont pliées, de préférence l'une vers l'autre, avec leurs sections (48, 50) faisant saillie sur le côté intérieur (46) du matériau isolant (38), de sorte qu'au moins l'une de ces sections (48, 50) repose contre le côté intérieur (46) du matériau isolant (38),
**caractérisé en ce que**, dans la mesure d), les branches en U (42, 44) sont repliées de telle sorte que la partie repliée (48) de l'une des branches en U (42) repose contre le côté intérieur (46) du matériau isolant (38) et que la partie repliée (50) de l'autre branche en U (44) s'engage sur la partie repliée (48) de ladite branche en U (42) sur son côté opposé au matériau isolant (38) de telle sorte que, pour l'essentiel, seule la partie repliée (48) de ladite branche en U (42) entre en contact avec le matériau isolant (38).

9. Procédé selon la revendication 8, **caractérisé en ce que** l'étape a) comprend la formation de l'enveloppe d'élément de gaine (19) avec au moins une zone de réception de l'élément de fixation (32) avec une épaisseur de paroi (W) qui est réduite dans une zone d'enveloppe entourant la zone de réception de l'élément de fixation (32) par rapport à une épaisseur de paroi de base (G) de l'enveloppe d'élément de gaine (19).

10. Procédé selon la revendication 9, **caractérisé en ce que** l'étape a) comprend la provision de l'enveloppe d'élément de gaine (19) avec une épaisseur de paroi de base (G) comprise entre 0,4 mm et 0,6 mm, de préférence d'environ 0,5 mm, et la formation de l'enveloppe d'élément de gaine (19) avec une épaisseur de paroi comprise entre 0,2 mm et 0,4 mm, de préférence d'environ 0,3 mm, dans au moins une zone de réception d'élément de fixation (32), ou/et qu'un renfoncement (36) est formé à l'étape a) pour fournir au moins une zone de réception d'élément de fixation (32) sur un côté extérieur (34) de l'enveloppe de l'élément de gainage (19), à positionner à l'opposé d'un composant à gainer.

11. Procédé selon une des revendications 8 à 10, **caractérisé en ce que** l'enveloppe de l'élément de gainage (19) est formée comme une pièce de tôle façonnée à l'étape a).

12. Procédé selon la revendication 9 et la revendication 11, **caractérisé en ce que** ledit au moins une zone de réception de l'élément de fixation (32) est formée par usinage par déplacement de matière ou/et par usinage par enlèvement de matière d'une ébauche de tôle utilisée pour la formation de l'enveloppe de l'élément de gainage (19) à l'étape a).

13. Procédé selon l'une des revendications 8 à 12, **caractérisé en ce que** le matériau isolant (38) est fourni sous la forme d'un matériau isolant en forme de mat à l'étape b).

14. Procédé selon l'une des revendications 8 à 13, **caractérisé en ce qu'**aucune autre étape de fixation du matériau isolant (38) sur l'enveloppe d'élément de gaine (19) n'est effectuée en dehors de l'étape d) de fixation du matériau isolant (38) sur l'enveloppe d'élément de gaine (19) par au moins un élément de fixation (40).

15. Système d'échappement, comprenant au moins un composant gainé par un dispositif de gainage (16) selon l'une des revendications 1 à 7, qui est de préférence fabriqué par un procédé selon l'une des revendications 8 à 14.
